# EUROPÄISCHE PATENTANMELDUNG

(11) **EP 2 333 189 A1**
(43) Veröffentlichungstag der Anmeldung: **15.06.2011**
(21) Anmeldenummer: 09177569.2
(22) Anmeldetag: 01.12.2009
(51) Int. Cl.: E04D 5/10, B32B 7/12, B32B 27/08, B32B 27/30, B32B 27/36

(54) **Abdichtungsbahn mit Weichmachermigrationssperre**

(71) Anmelder: Sika Technology AG, 6340 Baar (CH)
(72) Erfinder: Slongo, Mario, 1712 Tafers (CH); Kerber, Carine, 6060 Sarnen (CH); Aust, Hagen, 53842 Troisdorf (DE)
(74) Vertreter: Isler, Jörg

(57) **Zusammenfassung**

Die vorliegende Erfindung betrifft eine Abdichtungsbahn 1, welche den folgenden Schichtenaufbau aufweist:
a) eine Polyvinylchlorid enthaltende Folie **(F1)**(2);
b) ein erster Klebstoff **(K1)** (3);
c) eine Polyethylenterephthalat-Folie **(F2)**(4);
d) ein zweiter Klebstoff **(K2)** (5);
wobei die Schichten in der Reihenfolge a), b), c) und d) angeordnet sind.

Diese Abdichtungsbahn ermöglicht es, grossflächige Verklebungen einer PVC-Bahn zu realisieren, ohne dass die auf Migration der Weichmacher aus der PVC-Folie in den Klebstoff zurückzuführende Probleme auftreten, bzw. diese Probleme zumindest stark vermindert werden.

## Beschreibung

### Technisches Gebiet

Die Erfindung betrifft das Gebiet der PVC-Abdichtungsbahnen, insbesondere für den Dachbau.

### Stand der Technik

PVC-Abdichtungsbahnen sind seit längerem bekannt. Sie werden auch seit langem für das Abdichten von Dächern und Dachstrukturen verwendet. Traditionell werden die Bahnen auf dem Dach verlegt und miteinander verschweisst. Für das Befestigen derartiger Bahnen kommen bisher primär mechanische Verankerungen, z. B. Nägel, zum Einsatz. Hierbei ist natürlich die Gewährleistung der Dichtheit ein grosses Problem.

PVC-Abdichtungsbahnen enthalten grosse Menge an Weichmacher um eine Flexibilität der Abdichtungsbahn auch langfristig zu gewährleisten.

Ein Verkleben von derartigen PVC-Abdichtungsbahnen mit dem Untergrund wurde in Praxis ist bisher jedoch nicht erfolgreich durchgeführt, da es sich gezeigt hat, dass der für eine solche Verklebung benötigte Klebstoff Weichmacher aus der PVC-Abdichtungsbahn aufnimmt, wodurch der Klebstoff in seiner Mechanik und anderen technischen Eigenschaften, insbesondere auch der Haftung, innert kurzer Zeit stark negativ beeinflusst wird, so dass der Haftverbund innert kürzester Zeit verloren geht.

Für die Gewährleistung einer langfristigen Dachverklebung ist diese Veränderung nicht akzeptierbar.

### Darstellung der Erfindung

Die Aufgabe der vorliegenden Erfindung ist es daher, eine PVC-Abdichtungsbahn bzw. ein Verfahren der Abdichtung zur Verfügung zu stellen, welche die Weichmacheraufnahme des Klebstoff aus der PVC-Folie zumindest stark vermindert, wenn nicht gar unterbindet.

Überraschenderweise wurde gefunden, dass eine Abdichtungsbahn gemäss Anspruch 1 diese Aufgabe zu lösen vermag. Insbesondere erlaubt es diese Folie auf einfache Art und Weise einen bisher lang gehegten Wunsch, nämlich eine vollflächige und langfristige Verklebung einer PVC-Bahn mit einem Substrat, insbesondere einem Dach oder einer Dachstruktur, zu realisieren und damit eine optimale Abdichtung zu erreichen. Es wurde überraschenderweise gefunden, dass eine Schicht aus PET eine sehr effiziente Barrierewirkung gegen Weichmacher, wie sie in PVC, vor allem Weich-PVC, üblicherweise eingesetzt werden, aufweist.

Die in diesem Dokument offenbarte Abdichtungsbahnen, lassen sich einfach produzieren, sind über längere Zeiträume lager- und transportfähig und lassen sich auf äusserst einfache Art und Weise verlegen und verkleben. Insbesondere werden für das Verlegen und Fixieren keinen mechanischen Befestigungsmittel, wie Nägel oder dergleichen, benötigt. Dies reduziert die Anfälligkeiten für Folien für Verletzungen. Demzufolge sind Quellen einer Undichtheit massiv vermindert.

### Wege zur Ausführung der Erfindung

Die vorliegende Erfindung betrifft in einem ersten Aspekt eine Abdichtungsbahn. Diese Abdichtungsbahn weist den folgenden Schichtenaufbau auf:
a) eine Polyvinylchlorid enthaltende Folie **(F1);**
b) ein erster Klebstoff **(K1);**
c) eine Polyethylenterephthalat -Folie **(F2);**
d) ein zweiter Klebstoff **(K2).**
Hierbei sind die Schichten in der Reihenfolge a), b), c) und d) angeordnet.

Als "Folie" werden in diesem Dokument insbesondere biegsame flächige Kunststoffe in einer Dicke von 0.05 Millimeter bis 5 Millimeter verstanden, die sich aufrollen lassen. Somit werden neben Folien im strengen Sinn von Dicken unter 1 mm, auch, und zwar vorzugsweise, Abdichtungsbahnen, wie sie typischerweise zum Abdichten von Tunnels, Dächern oder Schwimmbädern in einer Dicke von typischerweise 1 bis 3 mm, in Spezialfällen sogar in einer Dicke bis maximal 5 mm, verwendet werden, verstanden. Derartige Folien werden üblicherweise durch Streichen, Giessen, Kalandrieren oder Extrusion hergestellt und sind typischerweise in Rollen kommerziell erhältlich oder werden vor Ort hergestellt. Sie können einschichtig oder mehrschichtig aufgebaut sein. Es ist dem Fachmann klar, dass auch Folien noch andere Zusatzstoffe und Verarbeitungsmittel, wie Füllstoffe, UV- und Hitzestabilisatoren, Weichmacher, Gleitmittel, Biozide, Flammschutzmittel, Antioxidantien, Pigmente wie z.B. Titandioxid oder Russ, und Farbstoffe enthalten können. Das heisst, es werden in diesem Dokument auch derartige Folien als PVC-Folien bzw. Weich-PVC-Folien bzw. Polyethylenterephthalat -Folie bezeichnet, welche nicht zu 100% aus PVC bzw. Weich-PVC, bzw. PET bestehen.

Die Polyvinylchlorid enthaltende Folie **(F1),** im Folgenden auch einfach kurz PVC-Folie genannt, ist insbesondere eine für das Gebiet der Abdichtung von Gebäuden übliche PVC-Folie, insbesondere eine Weich-PVC-Folie. Derartige PVC-Folien enthalten insbesondere Weichmacher, typischerweise Phhalat-Weichmacher. Besonders geeignete PVC-Folien sind die von Sika Sarnafil AG, Schweiz, angebotenen Produkte Sikaplan®-12, Sikaplan®-15 G, Trocal® 12, Trocal® 15 SG sowie Produkte welche unter der Produktelinie Sarnafil® G410 und Sarnafil® S327 verkauft werden.

Die Polyethylenterephthalat-Folie **(F2),** im Folgenden auch einfach kurz PET-Folie genannt, basiert auf Polyethylenterephthalat (PET). Derartige PET-Folien sind gebräuchlich, beispielsweise in der Verpackungsindustrie. Es ist bevorzugt, dass deren Dicke mindestens 3 Mikrometer beträgt. Ist die Dicke geringer als 3 Mikrometer, ist die Migrationsbarrierenwirkung für Weichmacher ungenügend. Es hat sich erwiesen, dass die Polyethylenterephthalat-Folie optimalerweise eine Dicke von 5 bis 50 Mikrometer, bevorzugt von 10 bis 40 Mikrometer, aufweist. Die PET-Folie weist vorteilhaft wenig, bevorzugt keinen Weichmacher, auf.

Es wurde festgestellt, dass die PET-Folie eine ausgezeichnete Sperrwirkung gegen Weichmacher aufweist.

Um die Sperrwirkung noch weiter zu steigern, kann in einer Ausführungsform zusätzlich zur PET-Folie noch eine Aluminiumschicht verwendet werden, und zwar dergestalt, dass zwischen der Schicht b) des ersten Klebstoffs **(K1)** und der Schicht c) der Polyethylenterephthalat-Folie **(F2)** eine Schicht b') aus Aluminium **(F3),** insbesondere in Form einer Aluminiumbedampfung, angeordnet ist. Die Schichtdicke der Aluminiumschicht ist vorzugsweise dünner als 20 Mikrometer, bevorzugt zwischen 1 und 15 Mikrometer. Unter Verwendung einer derartigen Aluminiumschicht kann zudem die Dicke der PET-Folie **(F2)** reduziert werden. Es ist in diesen Fällen besonders geeignet, wenn die Dicke der PET-Folie **(F2)** mindestens 0.5 Mikrometer, insbesondere zwischen 1 Mikrometer und 50 Mikrometer, beträgt. Die Aluminiumschicht kann beispielsweise über Vakuumbeschichtungstechniken auf die PET-Folie oder durch Auf- oder Anschmelzen der PET-Folie auf eine Aluminiumfolie aufgebracht werden.

Die PVC-Folie **(F1)** ist in Kontakt mit einem ersten Klebstoff **(K1).** Dieser Klebstoff bewirkt einen guten Verbund der PVC-Folie mit der Polyethylenterephthalat -Folie **(F2).** Als derartigen ersten Klebstoff haben sich insbesondere Klebstoffe auf Basis von (Meth)acrylaten erwiesen. Es hat sich als besonders vorteilhaft erwiesen, wenn dieser Klebstoff durch Hitze aktivierbar ist. Weiterhin ist es für den Aufbau der Abdichtungsbahn vorteilhaft, wenn der erste Klebstoff wenig, bevorzugt keinen, Weichmacher enthält. Zudem sollte die Klebwirkung des Klebstoffs nicht durch Weichmacher aus der in Kontakt stehenden PVC-Folie negativ beeinflusst werden.

Bei der Herstellung der Abdichtungsbahn wird insbesondere bevorzugt, wenn die PVC-Folie oder die PET-Folie, bevorzugt die PET-Folie mit dem ersten Klebstoff **(K1)** beschichtet ist. Beim Kontaktieren der PET-Folie und der PVC-Folie wird über den dazwischen liegenden ersten Klebstoff ein verlässlicher Verbund erzielt. Dieses Kontaktieren erfolgt vorzugsweise bei erhöhter Temperatur. Wird als erster Klebstoff **(K1)** ein durch Hitze aktivierbarer Klebstoff verwendet, ist die Temperatur beim Kontaktieren insbesondere über der Aktivierungstemperatur des Klebstoffs gewählt, so dass der Klebstoff unmittelbar nach dem Kontaktieren aushärtet und dadurch unmittelbar der Klebverbund erfolgt. Für das Kontaktieren werden die zwei Folien vorzugsweise durch Rollen, insbesondere beheizte Rollen, geführt und zusammengepresst.

Eine derartig hergestellte Verbundfolie (PVC/Klebstoff/PET, bzw. PVC/Klebstoff/AI/PET) wird anschliessend mit einem zweiten Klebstoff **(K2)** auf der PET-Aussenseite beschichtet.

Der zweite Klebstoff **(K2)** ist vorzugsweise ein Haftklebstoff, insbesondere ein Haftklebstoff auf Basis eines thermoplastischen Kautschuks, bevorzugt auf Basis eines SBS-/SIS-Block-Copolymeren (SBS=Styrol/Butadien/ Styrol-Block-Copolymer, SIS=Styrol/Isopren/Styrol-Block-Copolymer). Weitere Möglichkeiten als Haftklebstoffe, wenn auch nicht bevorzugt, sind Haftklebstoffe auf Basis von Butylkautschuk, Bitumen, Polymermodifizierter Bitumen.

Weitere geeignete Haftklebstoffe sind Polyurethan-Haftklebstoffe.

Der Haftklebstoff weist typischerweise einen Klebrigmacherharz auf, welches es dem Haftklebstoff ermöglicht auf einem Substrat zu kleben.

Dass der zweite Klebstoff **(K2)** bereits Bestandteil der Abdichtungsfolie ist, ist beim Verlegen ein grosser Vorteil, weil sich die Abdichtungsfolie wie ein Klebband einfach verlegt werden kann, ohne dass der Verleger Klebstoff auftragen muss und Fehler beim Mischen oder Applizieren des Klebstoffs machen kann.

Um die Mechanik der Abdichtungsbahn zu optimieren, ist es vorteilhaft, wenn die Abdichtungsbahn durch Fasern verstärkt ist. Es ist besonders vorteilhaft, wenn die PVC-Folie **(F1)** durch Fasern verstärkt ist. Die Verstärkung durch Fasern kann in Form von losen Fasern oder -bevorzugtdurch flächige Faserngebilde, erfolgen. Vorzugsweise erfolgt die Verstärkung durch Fasern so, dass die PVC-Folie mit einer Fasermatte, einem Fasergelege oder einem Fasergewebe verstärkt ist. Als Fasern sind insbesondere Glasfasern oder Polyesterfasern geeignet.

Um die Abdichtungsbahn lager- und transportfähig zu gestalten, ist es bevorzugt, dass die Schicht des zweiten Klebstoffs **(K2)** auf der der Polyethylenterephthalat-Folie **(F2)** entgegen gesetzten Seite mit einer Trennfolie **(F4)** in Kontakt steht. Dadurch wird der klebrige Haftklebstoff vor irrtümlichen Verklebungen geschützt. Die Abdichtungsbahn kann nun gerollt werden, ohne dass die einzelnen Lagen einer derartigen Rolle miteinander verkleben. Bei Bedarf kann die Trennfolie von der Abdichtungsbahn entfernt werden, so dass die Abdichtungsbahn durch den freigelegten Klebstoff mit einem Untergrund verklebbar wird. Insbesondere bevorzugt wird die Trennfolie während des Verklebeprozesses entfernt. Als Trennfolie kommen insbesondere silikonisierte Papiere oder Silikonbasierende Polymerfilme, die aufgrund ihrer chemischen Struktur lediglich eine geringe Haftung zum zweiten Klebstoff **(K2)** aufweisen und leicht entfernt wieder werden können, ohne dass an ihnen Klebstoff haften bleibt.

In einem weiteren Aspekt betrifft die vorliegende Erfindung einen Verbundkörper, welcher aus einer vorgängig beschriebenen Abdichtungsfolie sowie ein damit über den zweiten Klebstoff **(K2)** der Abdichtungsfolie verklebtes Substrat **(S1)** besteht.

Als Substrat **(S1)** kann grundsätzlich jegliches geeignete Material dienen. Insbesondere geeignet als Substrate **(S1)** sind Baumaterialien, wie Beton, Gips, Stein, Backstein, Mörtel, Faserzemente und Natursteine wie Granit oder Marmor; Metalle oder Legierungen wie Aluminium, Stahl, Buntmetalle, verzinkte Metalle; Holz, Isolationsschäume, Polyisocyanuratharze (PIR); beschichtete Substrate wie beschichtete Metalle oder Legierungen; sowie Farben und Lacke. Insbesondere bevorzugt sind Materialien, wie sie als Dachuntergrund zum Einsatz kommen.

Die Substrate können bei Bedarf vor dem Applizieren des Klebstoffes oder Dichtstoffes vorbehandelt werden. Derartige Vorbehandlungen umfassen insbesondere physikalische und/oder chemische Reinigungsverfahren, beispielsweise Schleifen, Sandstrahlen, Bürsten oder dergleichen, oder Behandeln mit Reinigern oder Lösemitteln oder das Aufbringen eines Haftvermittlers, einer Haftvermittlerlösung oder eines Primers.

Bevorzugt erfolgt jedoch das Verkleben primerlos.

Da die Abdichtungsfolie vorzugsweise zum Abdichten von Dachstrukturen verwendet wird, ist der Verbundkörper vorzugsweise ein abgedichtetes Dach.

In einem weiteren Aspekt betrifft die vorliegende Erfindung ein Verfahren zum Abdichten eines Substrates **(S1).** Dieses Verfahren umfassend entweder die Schritte:
α) Entfernen der Trennfolie **(F4)** einer vorgängig beschriebenen Abdichtungsbahn;
β) Kontaktieren des zweiten Klebstoffs **(K2)** der Abdichtungsbahn mit
   dem abzudichtenden Substrat **(S1).**
   oder die Schritte:
α') Bereitstellen einer vorgängig beschriebenen Abdichtungsbahn;
β) Kontaktieren des zweiten Klebstoffs **(K2)** der Abdichtungsbahn mit dem abzudichtenden Substrat **(S1).**

Vor dem Schritt β) des Kontaktierens kann die Abdichtungsbahn in die zu verklebenden Position gebracht werden. Vorteilhaft erfolgt das Verkleben durch Abrollen der Abdichtungsbahn auf dem zu verklebenden Substrat **(S1).** Um eine flächige Abdichtung zu erreichen, ist es bei grossen Flächen bevorzugt, wenn die Randbereiche der einzelnen Abdichtungsbahnen miteinander überlappen. Um auch in diesen Fällen eine möglichst gute Abdichtung zu erreichen, ist ein möglichst guter Verbund zwischen den überlappenden Abdichtungsbahnen von Nöten. Dies wird insbesondere dadurch erreicht, indem am Randbereich der oberen der überlappenden Abdichtungsbahn kein zweiter Klebstoff **(K2)** vorhanden ist, sondern dass bevorzugt die PVC-Folie der überlappenden (d.h.) oberen Abdichtungsbahn in direktem Kontakt mit der PVC-Folie der überlappten (d.h. unteren) Abdichtungsbahn liegt und anschliessend diese zwei PVC-Schichten mittels eines geeigneten Klebstoffs verbunden oder -bevorzugt- mittels einer Schweissvorrichtung miteinander dicht verschweisst werden. Für diese Anwendung ist es vorteilhaft, wenn eine Abdichtungsbahn so gestaltet ist, dass jeweils eine der Längsseiten und gegebenenfalls eine der Breitseiten der Abdichtungsbahn am Randbereich einen über den Rand überstehende PVC-Folie aufweist, so dass dort kein zweite Klebstoff **(K2)** vorhanden ist

Alternativ ist es auch möglich, dass zwei Abdichtungsbahnen neben einander so verlegt werden, dass sie sich stirnseitig berühren oder nur durch einen schmalen Zwischenraum (von typischerweise kleiner als 1 cm) aufweisen. Der Spalt zwischen den einzelnen Abdichtungsbahnen kann beispielsweise durch eine über diesen Spalt gelegte PVC-Folie überdeckt werden und mit der PVC-Oberfläche der erfindungsgemässen Abdichtungsbahnen mittels eines geeigneten Klebstoffs verbunden oder -bevorzugtmittels einer Schweissvorrichtung miteinander dicht verschweisst werden.

Selbstverständlich ist es auch möglich, diese gerade beschriebenen zwei Methoden miteinander zu kombinieren. So ist es insbesondere sinnvoll, die Abdichtungsbahn so herzustellen, dass sie auf der Längsseite einen vorstehenden PVC-Streifen aufweist, so dass zwei neben einander liegende Bahnen, wie beschrieben, durch dachziegelartige Überlappung und Verschweissung des überstehenden PVC-Lappens mit der darunter liegenden Abdichtungsbahn abgedichtet werden können, während auf der Breitseite der Abdichtungsbahn, wie oben beschrieben, eine Verschweissung über einen separat aufgelegten PVC-Streifen, welcher auf die sich stirnseitig hintereinander anschliessenden (optimalerweise sich stirnseitig berührenden) Abdichtungsbahnen erfolgt.

Die vorgängig im Detail beschriebene Abdichtungsfolie wird vorzugsweise zum Abdichten eines Substrates **(S1),** insbesondere eines Daches, verwendet.

Insbesondere sind dies abzudichtende Flachdächer, Parkdecks, oder begrünte Dächer.

Abgesehen von Verwendungszweck finden die vorbeschriebenen Abdichtungsbahnen auch in anderen Gebieten des Tief- und Hochbaus Anwendungen.

Die vorliegende Erfindung ist insbesondere auch deshalb vorteilhaft, weil keine lösungsmittelbasierende Klebstoffe zum Verkleben benötigt werden.

Ein zentraler Aspekt der vorliegenden Erfindung ist die Verwendung einer Polyethylenterephthalat-Folie als Weichmachersperre zwischen einer Weichmacher enthaltenden Kunststofffolie und einem Klebstoff.

### Kurze Beschreibung der Zeichnungen

Im Folgenden wird die Erfindung anhand von bevorzugten Ausführungsbeispielen mit Hilfe der Figuren näher beschrieben, wobei darauf hingewiesen wird, dass nur die für das unmittelbare Verständnis der Erfindung wesentlichen Elemente gezeigt sind. Gleiche Elemente sind in den verschiedenen Figuren mit gleichen Bezugszeichen gekennzeichnet. Weiterhin wird darauf hingewiesen, dass es sich bei den hier gezeigten Figuren um schematische Darstellungen ohne Grössenbezüge handelt.

Es zeigen:
- Fig. 1: einen schematischen Querschnitt durch eine Abdichtungsbahn;
- Fig. 2: einen schematischen Querschnitt durch eine weitere Ausführungsform einer Abdichtungsbahn;
- Fig.3: schematisch unterschiedliche Stufen beim Verfahren zum Abdichten eines Substrates:
Fig. 3a einen schematischen Querschnitt durch eine Abdichtungsbahn mit Trennfolie;
Fig. 3b einen schematischen Querschnitt durch eine Abdichtungsbahn beim Entfernen der Trennfolie;
Fig. 3c einen schematischen Querschnitt durch eine Abdichtungsbahn beim Kontaktieren der Abdichtungsbahn mit dem zu verklebenden Substrat;
Fig. 3d einen schematischen Querschnitt durch eine Abdichtungsbahn beim Kontaktieren der Abdichtungsbahn mit dem zu verklebenden Substrat bei einem zu Fig.3b und Fig.3c alternativen Verklebungsprozess;
Fig. 3e einen schematischen Querschnitt durch einen gebildeten Verbundkörper;
- Fig. 4: einen schematischen Querschnitt durch Verbundkörper mit zwei überlappenden Abdichtungsbahnen.
- Fig. 5: einen schematischen Querschnitt durch einen Verbundkörper mit zwei abgedichteten Abdichtungsbahnen.

Die Zeichnungen sind schematisch. Es sind nur die für das unmittelbare Verständnis der Erfindung wesentlichen Elemente gezeigt. Mit Pfeilen sind Bewegungsrichtungen angezeigt.

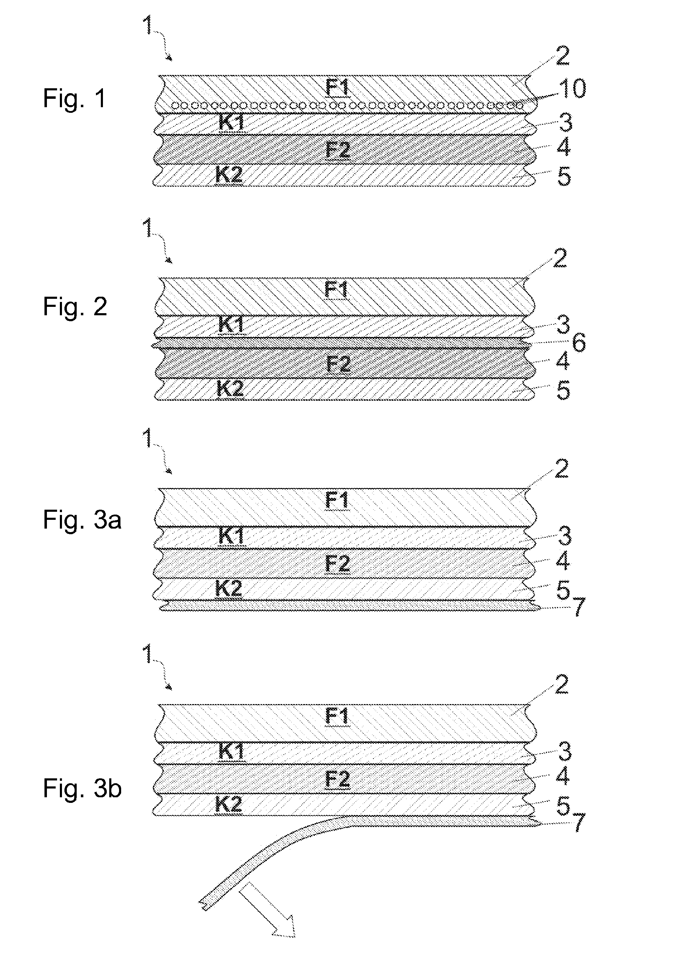

***Figur 1*** zeigt einen schematischen Querschnitt durch eine Abdichtungsbahn 1 mit dem Schichtenaufbau:
a) eine Polyvinylchlorid enthaltende Folie **(F1)**2;
b) ein erster Klebstoff **(K1)** 3;
c) eine Polyethylenterephthalat-Folie **(F2)** 4;
d) ein zweiter Klebstoff **(K2)** 5.

Die Schichten PVC-Folie **(F1)** 2, erster Klebstoff **(K1)** 3, PET-Folie **(F2)** 4 und zweiter Klebstoff **(K2)** 5 sind in dieser Reihenfolge in der hier gewählten Darstellung von oben nach unten angeordnet. In der hier gewählten Ausführungsform ist die PVC-Folie 2 mit Fasern, insbesondere mit einem Glasfasergewebe 10, verstärkt. Der erste Klebstoff **(K1)** 3, welcher in direktem Kontakt mit der PVC-Folie **(F1)** 2 und der PET-Folie **(F2)** 4 steht, ist insbesondere ein durch Hitze aktivierbarer Klebstoff auf Basis von (Meth)acrylaten. Der zweite Klebstoff **(K2)** 5 ist insbesondere ein Haftklebstoff, insbesondere ein Haftklebstoff auf Basis eines thermoplastischen Kautschuks, bevorzugt auf Basis eines SBS-/SIS-Block-Copolymeren, und ist auf der der PVC-Folie entgegen gesetzten Seite der PET-Folie **(F2)** 4 aufgebracht. Eine derartige Abdichtungsbahn weist eine ausgezeichnete Sperrfunktion gegen Weichmacher, welche aus der PVC-Folie **(F1)** 2 stammen, auf und verhindern, dass diese Weichmacher in den zweiten Klebstoff **(K2)** 5 migrieren.

***Figur 2*** zeigt einen schematischen Querschnitt durch eine weitere Ausführungsform einer Abdichtungsbahn 1. Sie zeigt denselben Schichtaufbau wie er in der Figur 1 oben beschrieben wurde mit der Ausnahme, dass zwischen der Schicht b) des ersten Klebstoffs **(K1)** 3 und der Schicht c) der Polyethylenterephthalat-Folie **(F2)** eine Schicht b') aus Aluminium **(F3)** 6 angeordnet ist. Eine derartige Abdichtungsbahn weist eine noch erhöhte Weichmachermigrationssperrwirkung auf.

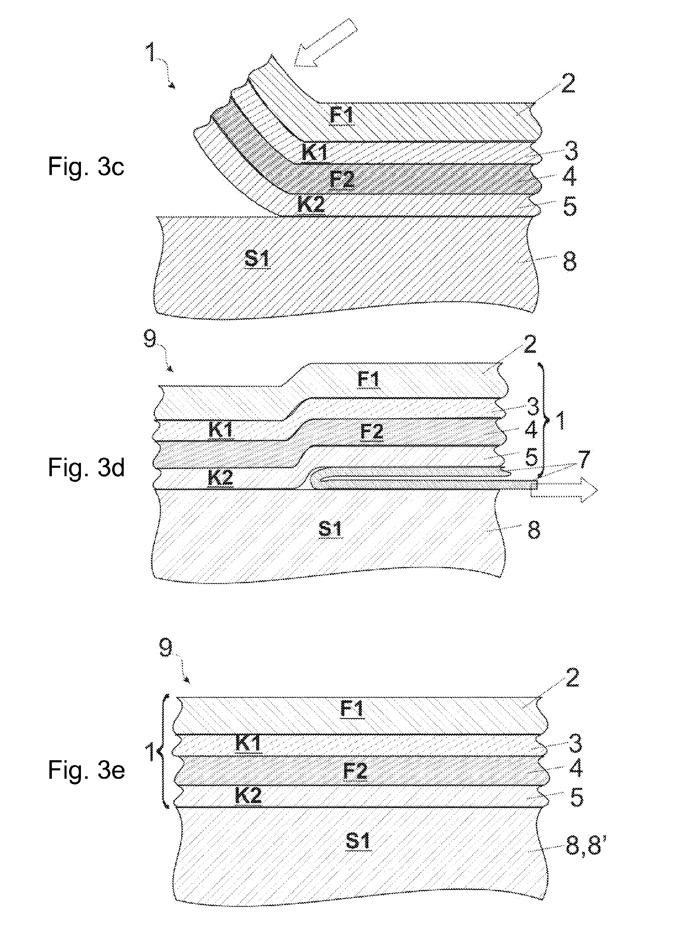

In ***Figur 3******,*** bestehend aus den Figuren 3a, 3b, 3c und 3d, zeigt schematisch die unterschiedlichen Stufen beim Verfahren zum Abdichten eines Substrates:
***Figur 3a*** zeigt einen schematischen Querschnitt durch eine Abdichtungsbahn 1 mit Schichten PVC-Folie **(F1)** 2, erster Klebstoff **(K1)** 3, PET-Folie **(F2)** 4 und zweiter Klebstoff **(K2)** 5. Zudem steht die Schicht des zweiten Klebstoffs **(K2)** 5 auf der der Polyethylenterephthalat-Folie **(F2)** 4 entgegen gesetzter Seite mit einer Trennfolie **(F4)** 7 in Kontakt. Der als zweiter Klebstoff **(K2)** gewählte Haftklebstoff, ist somit vollflächig von der Trennfolie abgedeckt, so dass die Abdichtungsbahn ohne Verkleben angefasst, gelagert, transportiert und insbesondere gerollt werden kann.
***Figur 3b*** zeigt einen schematischen Querschnitt durch die Abdichtungsbahn 1, wie sie in Figur 3a beschieben ist, beim Entfernen der Trennfoliefolie **(F4)** 7.
***Figur 3c*** zeigt einen schematischen Querschnitt. Hier wird die Abdichtungsbahn 1 nachdem wie in Figur 3b gezeigt die Trennfolie **(F4)** 7 entfernt wurde, auf das Substrat **(S1)** 8 aufgebracht, indem der zweite Klebstoff **(K2)** 5 der Abdichtungsbahn 1 mit dem abzudichtenden Substrat **(S1)** 8 kontaktiert wird.
In ***Figur 3d*** ist schematisch die Bildung eines Verbundes 9 gezeigt. Die Abdichtungsbahn 1 wird mit noch aufgebrachten Trennfolie **(F4)** 7 auf das abzudichtende Substrat **(S1)** 8 aufgelegt, in Form geschnitten und in die richtige Position gelegt. Nun wird das eine Ende der Abdichtungsbahn 1 angehoben und die Trennfolie 7 in diesem Bereich abgezogen und die Abdichtungsbahn über den nun freiliegenden Klebstoff **(K2)** 5 mit dem abzudichtenden Substrat **(S1)** 8 kontaktiert und verklebt. Nun wird die Trennfolie kontinuierlich zwischen Abdichtungsfolie 1 und abzudichtendem Substrat 8 abgezogen, so dass unmittelbar nach dem Abziehen (Entfernen) der Trennfolie 7 der zweite Klebstoff **(K2)** 5 der Abdichtungsbahn 1 mit dem abzudichtenden Substrat **(S1)** 8 kontaktiert wird und diese miteinander verklebt. Diese Art der Verklebung ist insbesondere für grossflächige Verklebungen bevorzugt, da auf diese Art und Weise einfacher passgenaue Verklebungen, bzw. Abdichtungen erzielt werden können.
***Figur 3e*** zeigt einen schematischen Querschnitt durch den als Ergebnis des durch Figuren 3a, 3b, 3c bzw. 3d gezeigten Verfahrens zum Abdichten eines Substrates resultierenden Verbundköper 9. Der Verbundkörper 9 besteht somit aus einer Abdichtungsfolie 1 sowie ein damit über den zweiten Klebstoff **(K2)** 5 der Abdichtungsfolie 1 verklebtes Substrat **(S1)** 8. Ein derartiger Verbundkörper 9 ist insbesondere abgedichtetes Dach, da als abzudichtendes Substrat **(S1)** 8 insbesondere ein Dach 8' bevorzugt wird.

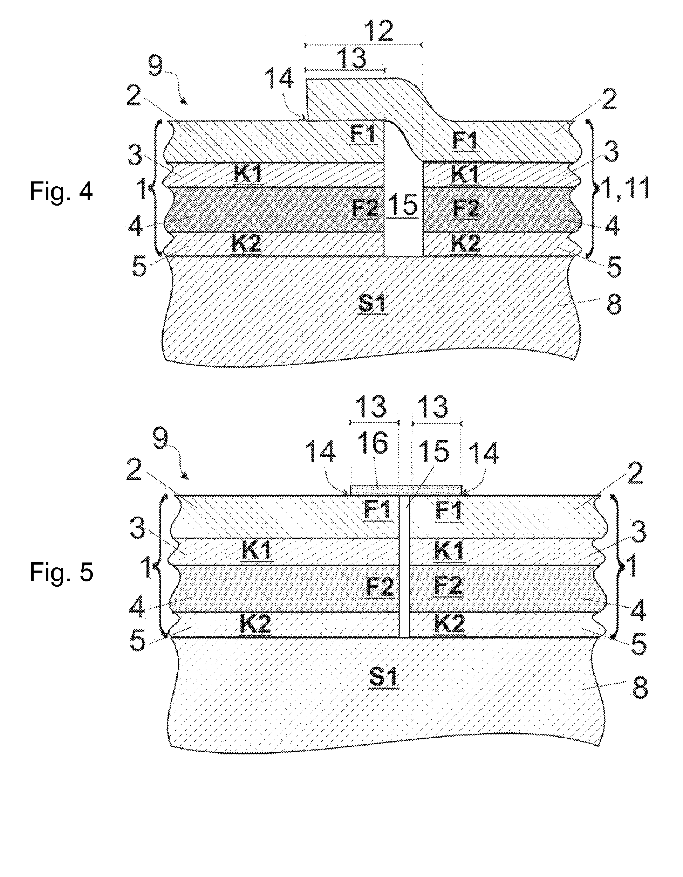

***Figur 4*** zeigt einen schematischen Querschnitt durch Verbundkörper mit zwei überlappenden Abdichtungsbahnen. Im linken Bereich der Figur ist das Ende einer Abdichtungsbahn 1, wie in Figur 3e gezeigt, verklebt gezeigt. Um eine Abdichtung auch im Überlappungsbereich 12 zu gewährleisten, ist in der hier gezeigten Ausführungsform die überlappende Abdichtungsfolie 11 im Randbereich 12 derart gestaltet, dass dort kein zweiter Klebstoff **(K2)** 5 vorhanden ist, sondern dass bevorzugt die PVC-Folie der überlappende (d.h. oberen) Abdichtungsbahn 11 in direktem Kontakt mit der PVC-Folie der überlappten (d.h. unteren) Abdichtungsbahn 1 liegt und anschliessend diese zwei PVC-Schichten im Überlappungsbereich 13 mittels einer Schweissvorrichtung miteinander dicht verschweisst werden. Die Verschweissung 14 hat zur Folge, dass die zwei überlappenden Abdichtungsbahnen eine tadellose Abdichtung gewähren und insbesondere verhindert wird, dass Wasser von aussen in den Spalt 15 zwischen den Abdichtungsbahnen 1,11 und damit zum abzudichtenden Substrat **(S1)** 8 gelangt.
***Figur 5*** zeigt einen schematischen Querschnitt durch einen Verbundkörper 9 mit zwei abgedichteten Abdichtungsbahnen. Diese hier gezeigte Möglichkeit ist eine Variante zu der der in Figur 4 gezeigten Möglichkeit der Abdichtung im Randbereich von Abdichtungsbahnen. Hier werden zwei Abdichtungsbahnen 1 so nebeneinander positioniert und verklebt, dass kein oder lediglich ein kleiner Spalt 15 zwischen den Abdichtungsbahnen 1 entsteht. Dieser stirnseitige Spalt 15 wird mittels eines PVC-Foliestreifens 16 abgedichtet, indem dieser PVC-Folienstreifens 16 über den Spalt 15 gelegt wird und im Überlappungsbereich 13 mittels einer Schweissvorrichtung miteinander dicht verschweisst wird.

### Beispiele

Die folgenden Beispiele dienen zur Illustration der vorliegenden Erfindung.

Es wurden die folgenden Abdichtungsbahnen wie folgt hergestellt:

### Ref. :

Sarnafil® G410-15 EL, eine kommerziell bei Sika Sarnafil AG, Schweiz, erhältliche PVC-Abdichtungsfolie (Dicke 1.5 mm, mit Glasvlies verstärkt), wurde einseitig mit SikaMelt®-9209HT, einem kommerziell bei Sika Automotive GmbH, Deutschland, erhältliche Haftklebstoff in einer Menge von 150 g/m² beschichtet. Auf den beschichteten Haftklebstoff wurde anschliessend ein silikonisiertes Papier als Trennfolie aufgelegt, um ein irrtümliches Verkleben zu verhindern. Diese Abdichtungsbahn dient zu Vergleichszwecken und wird im Folgenden als ***Ref.*** bezeichnet.

### 1:

Sarnafil® G410-15 EL, eine kommerziell bei Sika Sarnafil AG, Schweiz, erhältliche PVC-Abdichtungsfolie (Dicke 1.5 mm, mit Glasvlies verstärkt), wurde mit einer einseitig mit hitzeaktivierbaren Methacrylat-Klebstoff beschichteten 30 Mikrometer dicken PET-Folie bei 150-165°C gefügt und mittels zwei Walzen verpresst und miteinander verklebt. Die Orientierung der mit Klebstoff beschichteten PET-Folie war hierbei derart, dass die mit Klebstoff beschichtete Seite mit der PVC-Folie in Kontakt kam. Durch die Hitzeaktivierung des Klebstoffs bedingt, zeigte sich unmittelbar nach Verlassen der Pressrollen ein guter Haftverbund zwischen den zwei Folien.

Die Oberfläche der so hergestellten Verbundfolie PVC/Klebstoff/PET wurde einseitig auf der PET-Seite mit SikaMelt®-9209HT, einem kommerziell bei Sika Automotive GmbH, Deutschland, erhältliche Haftklebstoff in einer Menge von 150 g/m² beschichtet. Auf den beschichteten Haftklebstoff wurde anschliessend ein silikonisiertes Papier als Trennfolie aufgelegt, um ein irrtümliches Verkleben zu verhindern. Diese Abdichtungsbahn wird im Folgenden als ***1*** bezeichnet.

### 2:

Eine einseitig mit Aluminium bedampfte PET-Folie der Dicke 12 Mikrometer wurde auf der Aluminiumseite mit hitzeaktivierbaren Methacrylat-Klebstoff beschichtet. Diese Klebstoffbeschichtete AI/PET-Folie wurde bei 150 - 170 °C mit Sarnafil® G410-15 EL, eine kommerziell bei Sika Sarnafil AG, Schweiz, erhältliche PVC-Abdichtungsfolie (Dicke 1.5 mm, mit Glasvlies verstärkt), mit einer Dublieranlage gefügt und miteinander verklebt. Hierbei werden die AI/PET-Folie und die PVC-Abdichtungsfolie über je einen Dampfbadheisszylinder erwärmt und danach zwischen zwei Druckwalzen verpresst und miteinander verklebt. Die Orientierung der mit Klebstoff beschichteten PET-Folie war hierbei derart, dass die mit Klebstoff beschichtete Seite mit der PVC-Folie in Kontakt kam. Durch die Hitzeaktivierung des Klebstoffs bedingt, zeigte sich unmittelbar nach Verlassen der Pressrollen ein guter Haftverbund zwischen den zwei Folien.

Die Oberfläche der so hergestellten Verbundfolie PVC/Klebstoff/AI/PET wurde einseitig auf der PET-Seite mit SikaMelt®-9209HT, einem kommerziell bei Sika Automotive GmbH, Deutschland, erhältliche Haftklebstoff einseitig in einer Menge von 150 g/m² beschichtet. Auf den beschichteten Haftklebstoff wurde anschliessend ein silikonisiertes Papier als Trennfolie aufgelegt, um ein irrtümliches Verkleben zu verhindern. Diese Abdichtungsbahn wird im Folgenden als ***2*** bezeichnet.

### Prüfung

Zur Prüfung wurden die Abdichtungsbahnen mit einem Cutter in Streifen der Dimensionen 5 cm x 20 cm (für Zinkblech) bzw. 5 cm x 25 cm (für Duraguard) geschnitten, die Trennfolien der Abdichtungsbahnen entfernt und 4 derartige Streifen nebeneinander auf ein 0.6mm dickes Zinkblech (Oberfläche elektrolytisch verzinkt) der Dimension 20 cm x 25 cm bzw. auf eine 8.5 mm dicke Platte Dens Deck Duraguard der Firma Georgia-Pacific Building Products, USA (Glasvlies modifizierte Gipsplatte) der Dimension 25 cm x 25 cm aufgeklebt und mit ein 5kg-Andruckrolle angepresst und während 7 Tagen bei 23°C / 50 % rel. Luftfeuchtigkeit konditioniert.

Diese so gebildeten Verbundkörper wurden während einer Lagerzeit von total 4 Wochen bei 23°C / 50 % rel. Luftfeuchtigkeit ("*RT*"), im Umluftofen bei 50°C ("50°C") bzw. bei 70°C ("70°C") gelagert und die Schälfestigkeit nach 1, 2 3 und 4 Wochen jeweils getestet. Es wurde hierbei jeweils jede Woche einer der vier Streifen getestet.

Die Schälfestigkeit ("SF") wurde nach EN 1372 gemessen und die Messwerte sind in Tabelle 1 und Tabelle 2 als SF (N/50 mm) angegeben. Der Abreisswinkel wurde beim Zinkblech nicht 90° sondern 30° gewählt, weil bei es sich gezeigt hat, dass bei einem Abrisswinkel von 90°C die Duraguard-Platten zerstört wurden.

**Tabelle 1. Resultate der Schälfestigkeiten auf Zinkblech nach unterschiedlichen Lagerungen.**

| | | ***Ref.*** | ***1*** | ***2*** |
|---|---|---|---|---|
| **Substrat= Zinkblech** | | *SF* [N/50mm] | *SF* [N/50mm] | *SF* [N/50mm] |
| Lagertemperatur | Lagerdauer | | | |
| *RT* | 1 Woche | <10 | 20 | 28 |
| *RT* | 2 Wochen | <10 | 18 | 26 |
| *RT* | 3 Wochen | <10 | 17 | 24 |
| *RT* | 4 Wochen | <10 | 17 | 21 |
| | | | | |
| *50°C* | 1 Woche | <10 | 22 | 22 |
| *50°C* | 2 Wochen | <10 | 22 | 22 |
| *50°C* | 3 Wochen | <10 | 18 | 21 |
| *50°C* | 4 Wochen | <10 | 17 | 20 |
| | | | | |
| *70°C* | 1 Woche | n.m.¹ | 25 | 26 |
| *70°C* | 2 Wochen | n.m.¹ | 24 | 26 |
| *70°C* | 3 Wochen | n.m.¹ | 22 | 26 |
| *70°C* | 4 Wochen | n.m.¹ | 21 | 23 |

¹n.m.=nicht messbar: Die Proben konnten nicht mehr gemessen werden, weil sich der Klebstoff während der Lagerung derart verflüssigte, dass sich der Probekörper in vertikaler Lagerung bereits löste.

**Tabelle 2. Resultate der Schälfestigkeiten auf Dens Deck Duraguard nach unterschiedlichen Lagerungen.**

| | | ***Ref.*** | ***1*** | ***2*** |
|---|---|---|---|---|
| **Substrat=Dens Deck Duraguard** | | *SF* [N/50mm] | *SF* [N/50mm] | *SF* [N/50mm] |
| Lagertemperatur | Lagerdauer | | | |
| *RT* | 1 Woche | 15 | 30 | 28 |
| *RT* | 2 Wochen | 14 | 20 | 26 |
| *RT* | 3 Wochen | 12 | 18 | 25 |
| *RT* | 4 Wochen | 11 | 15 | 25 |
| | | | | |
| *50°C* | 1 Woche | <10 | 20 | 29 |
| *50°C* | 2 Wochen | n.m.¹ | 20 | 27 |
| *50°C* | 3 Wochen | n.m.¹ | 18 | 26 |
| *50°C* | 4 Wochen | n.m.¹ | 14 | 25 |
| | | | | |
| *70°C* | 1 Woche | n.m.¹ | 14 | 23 |
| *70°C* | 2 Wochen | n.m.¹ | n.m.² | 22 |
| *70°C* | 3 Wochen | n.m.¹ | n.m.² | 20 |
| *70°C* | 4 Wochen | n.m.¹ | n.m.² | 19 |

¹n.m.=nicht messbar: Die Proben konnten nicht mehr gemessen werden, weil sich der Klebstoff während der Lagerung derart verflüssigte, dass der Probekörper sich in vertikaler Lagerung bereits löste.
²n.m.=nicht messbar: Die Streifen haben sich stark verbogen.

Es zeigt sich aus den Ergebnissen der Tabellen 1 und 2, dass die durch die Weichmacher-Migration bedingten Abfälle der Klebfestigkeiten nach verlängerter Lagerung, insbesondere nach Lagerung bei erhöhter Temperatur, bei den erfindungsgemässen Beispielen ***1*** und ***2,*** verglichen mit dem Vergleichsbeispiel ***Ref.,*** stark reduziert werden konnten. Besonders stark ausgeprägt ist die Verbesserung bei der Abdichtungsbahn des Beispiels ***2,*** welche neben PET auch noch zusätzlich Aluminium als Sperrschicht aufweist. Beispiele ***1*** und ***2*** zeichnen sich insbesondere durch eine gegenüber dem Vergleichsbeispiel ***Ref.1*** stark erhöhte Wärmestabilität (*50°C*). Äusserst resistent gegen Weichmachereinfluss war das Beispiel ***2.***

### Bezugszeichenliste

- 1: Abdichtungsbahn
- 2: Polyvinylchlorid enthaltende Folie **(F1)**
- 3: erster Klebstoff **(K1)**
- 4: Polyethylenterephthalat-Folie **(F2)**
- 5: zweiter Klebstoff **(K2)**
- 6: Aluminium **(F3)**
- 7: Trennfolie **(F4)**
- 8: Substrat **(S1)**
- 8': Dach
- 9: Verbundkörper
- 10: Fasern, Fasergewebe
- 11: überlappende Abdichtungsbahn 1
- 12: Randbereich der Abdichtungsbahn 11
- 13: Überlappungsbereich
- 14: Verschweissung
- 15: abgedichteter Spalt zwischen den Abdichtungsbahnen
- 16: PVC-Folienstreifen

## Patentansprüche

1. Abdichtungsbahn (1) aufweisend den folgenden Schichtenaufbau
a) eine Polyvinylchlorid enthaltende Folie **(F1)**(2);
b) ein erster Klebstoff **(K1)** (3);
c) eine Polyethylenterephthalat-Folie **(F2)**(4);
d) ein zweiter Klebstoff **(K2)** (5);
wobei die Schichten in der Reihenfolge a), b), c) und d) angeordnet sind.

2. Abdichtungsbahn gemäss Anspruch 1, **dadurch gekennzeichnet, dass** der erste Klebstoff **(K1)** (3) ein Klebstoff auf Basis von (Meth)acrylaten ist

3. Abdichtungsbahn gemäss Anspruch 2, **dadurch gekennzeichnet, dass** der erste Klebstoff **(K1)** (3) durch Hitze aktivierbar ist.

4. Abdichtungsbahn gemäss einem der vorhergehenden Ansprüche, **dadurch gekennzeichnet, dass** der zweite Klebstoff **(K2)**(5) ein Haftklebstoff ist.

5. Abdichtungsbahn gemäss einem der vorhergehenden Ansprüche, **dadurch gekennzeichnet, dass** die Polyethylenterephthalat-Folie **(F2)** (4) eine Dicke von 5 bis 50 Mikrometer, bevorzugt von 10 bis 40 Mikrometer, aufweist.

6. Abdichtungsbahn gemäss einem der vorhergehenden Ansprüche, **dadurch gekennzeichnet, dass** zwischen der Schicht b) des ersten Klebstoffs **(K1)** (3) und der Schicht c) der Polyethylenterephthalat-Folie eine Schicht b') aus Aluminium **(F3)** (6) angeordnet ist.

7. Abdichtungsbahn gemäss einem der vorhergehenden Ansprüche, **dadurch gekennzeichnet, dass** die Abdichtungsbahn durch Fasern (10) verstärkt ist.

8. Abdichtungsbahn gemäss einem der vorhergehenden Ansprüche, **dadurch gekennzeichnet, dass** die Schicht des zweiten Klebstoffs **(K2)** (5) auf der der Polyethylenterephthalat-Folie **(F2)** (4) entgegen gesetzten Seite mit einer Trennfolie **(F4)** (7) in Kontakt steht.

9. Verbundkörper (9) bestehend aus einer Abdichtungsfolie (1) gemäss einem der Ansprüche 1 bis 7 sowie ein damit über den zweiten Klebstoff **(K2)** (5) der Abdichtungsfolie verklebtes Substrat **(S1).**

10. Verbundkörper gemäss Anspruch 9, **dadurch gekennzeichnet, dass** der Verbundkörper ein abgedichtetes Dach ist.

11. Verfahren zum Abdichten eines Substrates **(S1)** (8) umfassend die Schritte
α ) Entfernen der Trennfolie **(F4)** (7) einer Abdichtungsbahn (1) gemäss Anspruch 8;
oder
α ') Bereitstellen einer Abdichtungsbahn (1) gemäss einem der Ansprüche 1 bis 7;
β ) Kontaktieren des zweiten Klebstoffs **(K2)** (5) der Abdichtungsbahn (1) mit dem abzudichtenden Substrat **(S1)** (8).

12. Verwendung einer Abdichtungsfolie (1) gemäss einem der Ansprüche 1 bis 8 zum Abdichten eines Substrates **(S1)** (8), insbesondere eines Daches (8').

13. Verwendung einer Polyethylenterephthalat-Folie als Weichmachersperre zwischen einer Weichmacher enthaltenden Kunststofffolie und einem Klebstoff.
